# EUROPÄISCHE PATENTANMELDUNG

(11) **EP 1 193 410 A1**
(43) Veröffentlichungstag der Anmeldung: **03.04.2002**
(21) Anmeldenummer: 01117248.3
(22) Anmeldetag: 17.07.2001
(51) Int. Cl.: F16C 27/06

(54) **Elastische Lageraufhängung für ein Wellenlager**

(30) Priorität: 27.09.2000 DE 10048998
(71) Anmelder: Carl Freudenberg KG, 69469 Weinheim (DE)
(72) Erfinder: Bade, Karl-Heinz, 69483 Waldmichelbach (DE); Meier, Alexander, 79400 Kandern (DE); Schütz, Michael, 79418 Schliengen (DE)

(57) **Zusammenfassung**

Elastische Lageraufhängung für ein Wellenlager (1), wobei das Wellenlager (1) radial außenseitig mit zumindest einem Anschlagpuffer (2) aus elastomerem Werkstoff verbunden ist, wobei der Anschlagpuffer (2) mittels zumindest einer, im Längsschnitt des Wellenlagers (1) betrachtet V-förmigen, sich in axialer Richtung erstreckenden Falte (3) aus elastomerem Werkstoff mit einem mit axialem Abstand (4) zum Wellenlager (1) benachbart angeordneten ersten Stützring (5) verbunden ist, wobei der erste Stützring (5) mit einer der Stirnseiten (6) einer Anschlaghülse (7) verbunden ist und wobei die andere Stirnseite (8) der Anschlaghülse (7) den Anschlagpuffer (2) mit radialem Abstand außenumfangsseitig umschließt.

## Beschreibung

### Stand der Technik

Die Erfindung betrifft eine elastische Lageraufhängung für ein Wellenlager.

Eine solche Lageraufhängung ist aus dem DE-GM 19 86 857 bekannt. Die vorbekannte Lageraufhängung besteht aus zwei Stützringen, wobei der erste Stützring den zweiten Stützring mit radialem Abstand außenumfangsseitig umschließt. Der erste und der zweite Stützring sind dabei in einer gedachten Radialebene angeordnet und durch eine sich in radialer Richtung erstreckende, V-förmige Falte aus elastomerem Werkstoff verbunden. Die V-förmige Falte ist außerhalb des von den Stützringen begrenzten Raumes angeordnet, wobei der zweite Stützring radial innenseitig, auf der dem Wälzlager zugewandten Seite eine Beschichtung aus elastomerem Werkstoff aufweist.

Dabei ist allerdings zu beachten, dass, bedingt durch die Geometrie der Falte, die Relativbeweglichkeit der beiden Stützringe in axialer Richtung zueinander, für vieleFälle nicht ausreichend ist.

### Darstellung der Erfindung

Der Erfindung liegt die Aufgabe zugrunde, eine Lageraufhängung der eingangs genannten Art derart weiterzuentwickeln, dass das Wellenlager sowohl in radialer als in axialer Richtung weiter auslenkbar ist, ohne dass es zu einer mechanischen Überbeanspruchung der Falte und dadurch zu einer unerwünschten Verringerung der Gebrauchsdauer kommt.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine elastische Lageraufhängung für ein Wellenlager vorgesehen, wobei das Wellenlager radial außenseitig mit zumindest einem Anschlagpuffer aus elastomerem Werkstoff verbunden ist, wobei der Anschlagpuffer mittels zumindest einer, im Längsschnitt des Wellenlagers betrachtet V-förmigen, sich in axialer Richtung erstreckenden Falte aus elastomerem Werkstoff mit einem mit axialem Abstand zum Wellenlager benachbart angeordneten ersten Stützring verbunden ist, wobei der erste Stützring mit einer der Stirnseiten einer Anschlaghülse verbunden ist und wobei die andere Stirnseite der Anschlaghülse den Anschlagpuffer mit radialem Abstand außenumfangsseitig umschließt. Durch die sich in axialer Richtung erstreckende Falte ist von Vorteil, dass insbesondere große Auslenkbewegungen des Wellenlagers in axialer Richtung, bezogen auf die Lageraufhängung möglich sind, ohne den elastomeren Werkstoff, aus dem die Falte besteht, in unerwünscht hohem Maße zu beanspruchen. Außerdem ist durch die große Auslenkbarkeit der Falte von Vorteil, dass Wellenlager mit unterschiedlichen Durchmessern mit Anschlaghülsen, die an die jeweiligen Gegebenheiten des Anwendungsfalles angepasst sind, kombiniert werden können. So besteht beispielsweise die Möglichkeit, Wellenlager mit vergleichleise kleinem Außendurchmesser mit Anschlaghülsen zu kombinieren, deren Anschlagflächen in radialer Richtung vergleichsweise weit von den Anschlagpuffern entfernt angeordnet sind.
Das Wellenlager kann beispielsweise als Kardanwellenlager oder als Zwischenwellenlager zur Anwendung gelangen. Gelangt das Wellenlager beispielsweise als Kardanwellenlager zur Anwendung, ergeben sich temperaturbedingte Verlagerungen der Kardanwelle und des die Kardanwelle umschließenden Wellenlagers in axialer Richtung, die durch die V-förmige Falte aufgenommen werden.

Um bei Extremauslenkungen in radialer Richtung eine unerwünschte Geräuschentwicklung zu vermeiden, ist der Anschlagpuffer vorgesehen, der sich bevorzugt mit einer progressiven Dämpfungscharakteristik am Innenumfang der Anschlaghülse zur Begrenzung anlegt.

Durch die sich in axialer Richtung erstreckende Falte werden gebrauchsdauerverringernde Stauchungen des elastomeren Werkstoffs, aus dem die Falte besteht, auch bei extremen Ausschlägen des Wellenlagers bezogen auf die Anschlaghülse in radialer Richtung vermieden.

Im Hinblick auf eine einfache, kostengünstige Herstellbarkeit der Lageraufhängung kann es vorgesehen sein, dass der Anschlagpuffer und die Falte einstückig und materialeinheitlich ausgebildet sind.

Gemäß einer ersten Ausgestaltung kann es vorgesehen sein, dass der Anschlagpuffer des Wellenlager unmittelbar anliegend berührt. Der Anschlagpuffer kann beispielsweise auf den Außenring eines Wälzlagers direkt aufvulkanisiert sein. Hierbei ist von Vorteil, dass die Lageraufhängung insgesamt einen teilarmen Aufbau aufweist.

Nach einer zweiten Ausgestaltung kann es vorgesehen sein, dass das Wellenlager von einem zweiten Stützring radial außenseitig kraft- und/oder formschlüssig umschlossen ist und dass der Anschlagpuffer den zweiten Stützring unmittelbar anliegend berührt. Hierbei ist von Vorteil, dass die Möglichkeit besteht, das Wellenlager bedarfsweiße separat auszutauschen. Bei beschädigtem und / oder verschlissenem Wellenlager wird dieses aus dem zweiten Stützring ausgepresst und durch ein neues Wellenlager, das in den zweiten Stützring eingepresst wird, ersetzt.

Der erste und/oder der zweite Stützring können von elastomerem Werkstoff vollständig umschlossen sein. Die Ummantelung des ersten und/oder zweiten Schutzrings besteht dann bevorzugt aus dem selben elastomeren Werkstoff wie der Anschlagpuffer und die V-förmige Falte. Durch die vollständige Ummantelung der beiden Stützringe mit elastomerem Werkstoff ist von Vorteil, dass diese zuverlässig vor Korrosion geschützt sind. Insbesondere dann, wenn es sich bei dem Wellenlager um ein Kardanwellenlager handelt, das unter dem Unterboden von Kraftfahrzeugen angeordnet ist, ist eine solche Ausgestaltung von hervorzuhebendem Vorteil, da das Kardanwellenlager gebrauchsdauerverringernden Umwelteinflüssen, wie beispielsweise verunreinigtem Spritzwasser, unmittelbar ausgesetzt ist.

Außerdem ist bei einer derartigen Ausgestaltung von Vorteil, dass herstellungsbedingte Toleranzen der ineinandergefügten Bauteile durch die Elastomer-Beschichtung ausgeglichen werden. Durch die großzügiger tolerierbaren Bauteile ist die Lageraufhängung kostengünstig herstellbar.

Das Wellenlager, der Anschlagpuffer, die Falte und der erste Stützring oder der zweite Stützring, der Anschlagpuffer, die Falte und der erste Stützring können jeweils eine vormontierbare Einheit bilden. Die Handhabung derartiger, vormontierbarer Einheiten ist besonders einfach, und die Gefahr von Montagefehlern ist auf ein Minimum begrenzt.

Der Anschlagpuffer kann wulstförmig, umfangsseitig in sich geschlossen ausgebildet sein. Hierbei ist von Vorteil, dass unabhängig davon, wo der Anschlagpuffer die Innenumfangsfläche der Anschlaghülse berührt, eine annähernd gleichmäßige Werkstoffbeanspruchung des Anschlagpuffers gegeben ist.

Nach einer anderen Ausgestaltung besteht die Möglichkeit, dass 3 Anschlagpuffer, gleichmäßig in Umfangsrichtung verteilt um das Wellenlager angeordnet sind. Hierbei ist von Vorteil, dass die Masse der Lageraufhängung, bezogen auf einen wulstförmigen, in sich geschlossenen Anschlagpuffer etwas reduziert ist, wodurch die Kräfte, die durch Unwuchten während der bestimmungsgemäßen Verwendung entstehen, insbesondere bei kleinen, leichten Wellenlagern, reduziert sind.

Die Anschlaghülse kann aus einem tiefziehbaren, metallischen Werkstoff bestehen. Tiefziehteile sind einfach und kostengünstig herstellbar, wobei die Anschlaghülse bevorzugt mit einer Korrosionsschutzschicht, beispielsweise einer Lackierung versehen ist, insbesondere dann, wenn das Wellenlager als Kardanwellenlager in Kraftfahrzeugen zur Anwendung gelangt.

Der erste Stützring und die Anschlaghülse können kraft- und/oder formschlüssig verbunden sein. Der Formschluss kann beispielsweise dadurch erfolgen, dass die Anschlaghülse auf der dem ersten Stützring zugewandten Seite zumindest eine, sich in Umfangsrichtung erstreckende Vertiefung aufweist, die von elastomerem Werkstoff der Ummantelung des ersten Stützrings vollständig ausgefüllt ist. Dadurch, dass der elastomere Werkstoff formschlüssig in die Vertiefung eingreift, ergibt sich eine formschlüssige Verbindung in diesem Bereich, wobei in den axial angrenzenden Teilbereichen der erste Stützring zusätzlich durch Kraftschluss innerhalb der Anschlaghülse gehalten ist.

Die Anschlaghülse kann zumindest an ihrer tiefsten Stelle - im eingebauten, gebrauchsfertigen Zustand - zumindest eine Ablaufbohrung aufweisen. Gemäß einer vorteilhafteren Ausgestaltung kann es vorgesehen sein, dass sechs Ablaufbohrungen gleichmäßig in Umfangsrichtung verteilt angeordnet sind. Die Ablaufbohrungen sind vorgesehen, um Spritzwasser, das in den durch den radialen Abstand gebildeten Spalt zwischen der Anschlaghülse und dem Anschlagpuffer eingedrungen ist, während der bestimmungsgemäßen Verwendung der Lageraufhängung wieder in die Umgebung abzuführen.

Hinsichtlich des Gewichts der Lageraufhängung ist es von Vorteil, wenn die Stützringe aus Leichtmetall, beispielsweise aus Aluminium, bestehen. Mit Vorteil sind die Ringe in elastomerem Werkstoff eingebettet, wodurch eine Kontaktkorrosion mit der Anschlaghülse unterbunden wird. Eine Beschichtung dieser Armierungsringe entfällt durch die Einbettung im polymeren Werkstoff.

### Kurzbeschreibung der Zeichnung

Zwei Ausführungsbeispiele der erfindungsgemäßen Lageraufhängung werden nachfolgend anhand der Figuren 1 bis 3 näher erläutert. Diese zeigen jeweils in schematischer Darstellung:
- Figur 1: Einen Längsschnitt durch ein erstes Ausführungsbeispiel, bei dem der Anschlagpuffer unmittelbar mit dem Außenring eines Wellenlagers verbunden ist,
- Figur 2: ein zweites Ausführungsbeispiel, bei dem der Anschlagpuffer mit einem zweiten Stützring verbunden ist, wobei das Wellenlager in den zweiten Stützring eingepresst ist,
- Figur 3: eine Seitenansicht des Ausführungsbeispiels aus Figur 2 von rechts.

### Ausführung der Erfindung

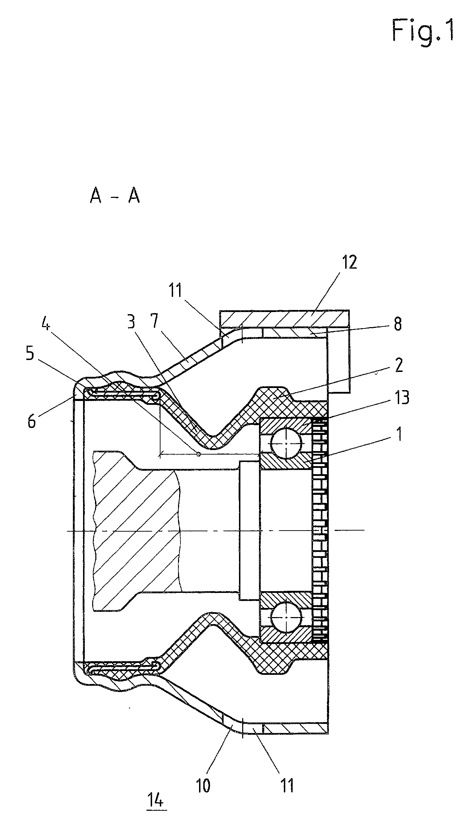

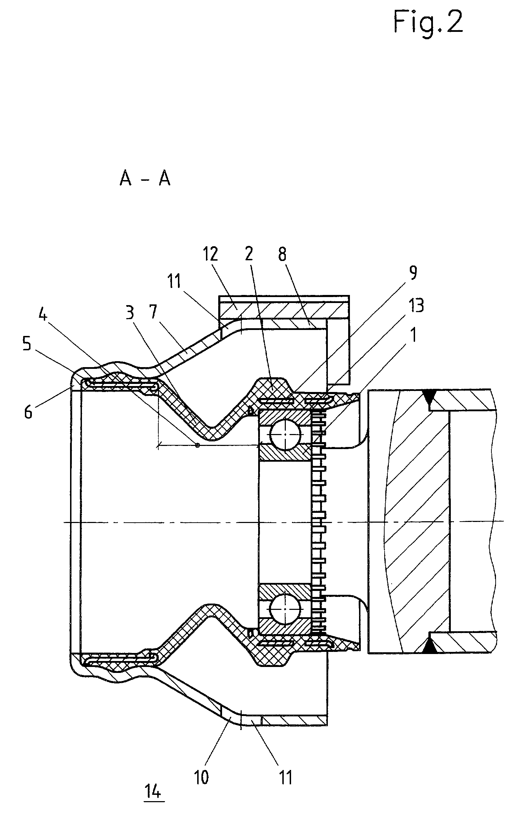

In den Figuren 1 und 2 sind zwei Ausführungsbeispiele einer elastischen Lageraufhängung für ein Wellenlager 1 gezeigt. Das Wellenlager 1 ist in diesen Ausführungsbeispielen jeweils durch ein Wälzlager gebildet und gelangt als Kardanwellenlager in hinterradgetriebenen Kraftfahrzeugen oder in Kraftfahrzeugen mit Allradantrieb zur Anwendung. Der Vorteil der gezeigten Lageraufhängung ist in den großen Axialwegen zu sehen, die das Wellenlager 1 bezogen auf den ersten Stützring 5 oder die Anschlaghülse 7 ausführen kann. Der Anschlagpuffer 2 ist in den hier gezeigten Ausführungsbeispielen wulstförmig ausgebildet und in Umfangsrichtung in sich geschlossen. Zum Ausgleich von Axialbewegungen der abgestützten Welle bezogen auf die Anschlaghülse 7, die mit einem Lagerbock 12 ortsfest verbunden ist, ist die im Längsschnitt des Wellenlagers 1 betrachtet V-förmige, sich in axialer Richtung erstreckende Falte 3 vorgesehen, die ebenso, wie der Anschlagpuffer 2, aus elastomerem Werkstoff besteht. Die V-förmige Falte 3 verbindet den Anschlagpuffer 2 mit dem ersten Stützring 5, der mit axialem Abstand benachbart zum Wellenlager 1 angeordnet ist. Die erste Stirnseite 6 der Anschlaghülse 7 umschließt den ersten Stützring 5 außenumfangsseitig mit radialer Vorspannung, wobei sich die Anschlaghülse 7 in Richtung ihrer anderen Stirnseite 8 im wesentlichen trichterförmig erweitert und den Anschlagpuffer 2 mit radialem Abstand umschließt. Der Anschlagpuffer 2 ist durch einen Spalt vom Innenumfang der Anschlaghülse beabstandet. Die Anschlaghülse 7 schützt die innenliegenden Bauteile gegenüber Wärmeeinwirkungen der Auspuffanlage.

In Figur 1 ist ein erstes Ausführungsbeispiel gezeigt, bei dem der Anschlagpuffer 2 unmittelbar auf den Außenring 13 des Wellenlagers 1 aufvulkanisiert ist.

In Figur 2 ist demgegenüber ein zweites Ausführungsbeispiel gezeigt, bei dem das Wellenlager 1 in einem zweiten Stützring 9 angeordnet ist, der das Wellenlager 1 radial außenseitig umschließt. Im gezeigten Ausführungsbeispiel sind sowohl der erste Stützring 5 als auch der zweite Stützring 9 jeweils von elastomerem Werkstoff vollständig umschlossen und dadurch vor schädlichen Umwelteinflüssen und Korrosion geschützt.

Die Anschlaghülse 7 ist mit sechs gleichmäßig in Umfangsrichtung verteilten Ablaufbohrungen 11 versehen, so dass Verunreinigungen und/oder Feuchtigkeit, die in den durch den radialen Abstand zwischen Anschlagpuffer 2 und Innenumfang der Anschlaghülse 7 gebildeten Spalt eingedrungen sind, an die Umgebung 14 wieder abgeführt werden.

In jedem der Ausführungsbeispiele besteht die Anschlaghülse 7 aus einem tiefziehbaren metallischen Werkstoff und ist im Bereich ihrer ersten Stirnseite 6 zur Aufnahme des ersten Stützrings 5 radial nach innen umgebördelt.

Die Verbindung zwischen der Anschlaghülse 7 und dem Lagerbock 12 erfolgt beispielsweise durch eine Verschweißung der beiden Bauteile miteinander.

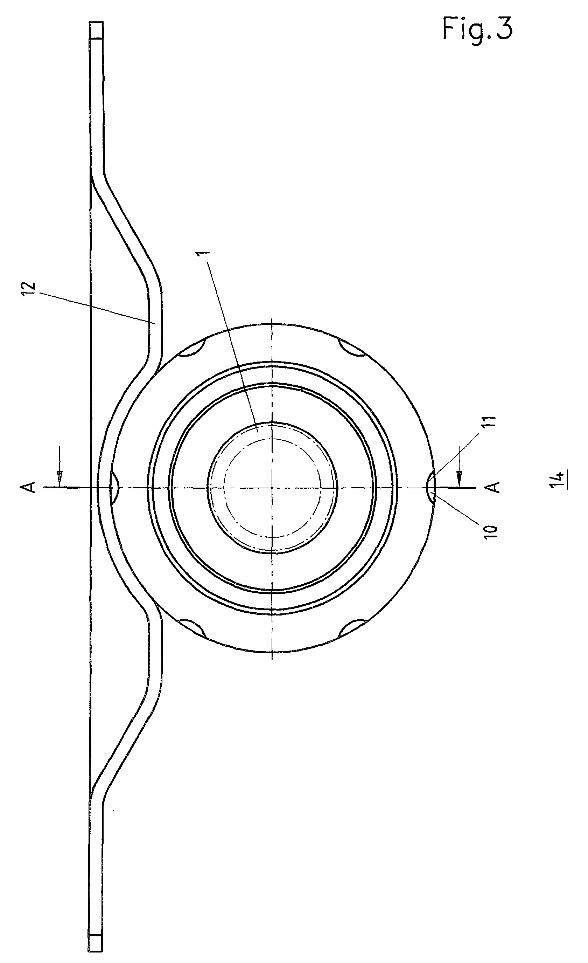

In Figur 3 ist eine Ansicht der Lageraufhängung aus Figur 2 von rechts gezeigt. Der Lagerbock 12 wird beispielsweise an der Unterseite eines Kraftfahrzeugs mit Hinterradantrieb montiert. Eine der Ablaufbohrungen 11 ist an der tiefsten Stelle 10 der Anschlaghülse angeordnet, wobei die Ablaufbohrungen 11 insgesamt gleichmäßig in Umfangsrichtung verteilt angeordnet sind.

## Patentansprüche

1. Elastische Lageraufhängung für ein Wellenlager (1), wobei das Wellenlager (1) radial außenseitig mit zumindest einem Anschlagpuffer (2) aus elastomerem Werkstoff verbunden ist, wobei der Anschlagpuffer (2) mittels zumindest einer, im Längsschnitt des Wellenlagers (1) betrachtet V-förmigen, sich in axialer Richtung erstreckenden Falte (3) aus elastomerem Werkstoff mit einem mit axialem Abstand (4) zum Wellenlager (1) benachbart angeordneten ersten Stützring (5) verbunden ist, wobei der erste Stützring (5) mit einer der Stirnseiten (6) einer Anschlaghülse (7) verbunden ist und wobei die andere Stirnseite (8) der Anschlaghülse (7) den Anschlagpuffer (2) mit radialem Abstand außenumfangsseitig umschließt.

2. Lageraufhängung nach Anspruch 1, **dadurch gekennzeichnet, dass** der Anschlagpuffer (2) und die Falte (3) einstückig und materialeinheitlich ausgebildet sind.

3. Lageraufhängung nach einem der Ansprüche 1 oder 2, **dadurch gekennzeichnet, dass** der Anschlagpuffer (2) das Wellenlager (1) unmittelbar anliegend berührt.

4. Lageraufhängung nach einem der Ansprüche 1 oder 2, **dadurch gekennzeichnet, dass** das Wellenlager (1) von einem zweiten Stützring (9) radial außenseitig kraft- und/oder formschlüssig umschlossen ist und dass der Anschlagpuffer (2) den zweiten Stützring (9) unmittelbar anliegend berührt.

5. Lageraufhängung nach einem der Ansprüche 1 bis 4, **dadurch gekennzeichnet, dass** der erste (5) und/oder der zweite Stützring (9) von elastomerem Werkstoff vollständig umschlossen sind.

6. Lageraufhängung nach einem der Ansprüche 1 bis 5, **dadurch gekennzeichnet, dass** das Wellenlager (1), der Anschlagpuffer (2), die Falte (3) und der erste Stützring (5) oder der zweite Stützring (9), der Anschlagpuffer (2), die Falte (3) und der erste Stützring (5) jeweils eine vormontierbare Einheit bilden.

7. Lageraufhängung nach einem der Ansprüche 1 bis 6, **dadurch gekennzeichnet, dass** der Anschlagpuffer (2) wulstförmig, umfangsseitig in sich geschlossen ausgebildet ist.

8. Lageraufhängung nach einem der Ansprüche 1 bis 6, **dadurch gekennzeichnet, dass** drei Anschlagpuffer (2) gleichmäßig in Umfangsrichtung verteilt um das Wellenlager (1) angeordnet sind.

9. Lageraufhängung nach einem der Ansprüche 1 bis 8, **dadurch gekennzeichnet, dass** die Anschlaghülse (7) aus einem tiefziehbaren, metallischen Werkstoff besteht.

10. Lageraufhängung nach einem der Ansprüche 1 bis 9, **dadurch gekennzeichnet, dass** der erste Stützring (5) und die Anschlaghülse (7) kraft- und/oder formschlüssig verbunden sind.

11. Lageraufhängung nach einem der Ansprüche 1 bis 10, **dadurch gekennzeichnet, dass** die Anschlaghülse (7) zumindest an ihrer tiefsten Stelle (10) - im eingebauten, gebrauchsfertigen Zustand - zumindest eine Ablaufbohrung (11) aufweist.

12. Lageraufhängung nach Anspruch 11, **dadurch gekennzeichnet, dass** sechs Ablaufbohrungen (11) gleichmäßig in Umfangsrichtung verteilt angeordnet sind.

13. Lageraufhängung nach einem der Ansprüche 4 bis 12, **dadurch gekennzeichnet, dass** der erste Stützring (5) und / oder der zweite Stützring (9) aus Leichtmetall, besonders bevorzugt aus Aluminium, gebildet ist und in elastomerem Werkstoff eingebettet ist.
